# EUROPÄISCHE PATENTSCHRIFT

(11) **EP 4 078 626 B1**
(45) Veröffentlichungstag und Bekanntmachung des Hinweises auf die Patenterteilung: **10.01.2024**
(21) Anmeldenummer: 21704410.6
(22) Anmeldetag: 22.01.2021
(51) Int. Cl.: H01C 1/08, B60L 1/00, B60L 7/02, B60L 7/22

(54) **BREMSWIDERSTAND FÜR EIN FAHRZEUG**
BRAKING RESISTANCE FOR A VEHICLE
RÉSISTANCE DE FREINAGE POUR UN VÉHICULE

(30) Priorität: 21.02.2020 DE 102020202249
(43) Veröffentlichungstag der Anmeldung: 26.10.2022
(73) Patentinhaber: Siemens Mobility GmbH, 81739 München (DE)
(72) Erfinder: BLISSE, Johannes, 91080 Spardorf (DE); DORNBERGER, Peter, 90489 Nürnberg (DE)
(74) Vertreter: Siemens Patent Attorneys
(86) Internationale Anmeldenummer: PCT/EP2021/051449
(87) Internationale Veröffentlichungsnummer: WO 2021/164981

(56) Entgegenhaltungen:
- DE-A1-102018 218 296
- DE-A1-102018 218 296
- DE-T2- 69 400 184
- FR-A- 1 131 168

## Beschreibung

Die Erfindung bezieht sich auf einen Bremswiderstand für ein mit einer elektrodynamischen Bremseinrichtung ausgestattetes Fahrzeug.

Ein solcher Bremswiderstand ist beim generatorischen elektrischen Bremsen z. B. eines Schienenfahrzeugs erforderlich, wenn dieses in einem nicht rückspeisefähigen Versorgungsnetz betrieben wird, um die mithilfe von Fahrmotoren erzeugte elektrische Energie anderweitig abzuführen. Der Bremswiderstand wandelt dann die elektrische Energie in Wärmeenergie um.

Ein bekannter Bremswiderstand geht beispielsweise aus der DE 10 2017 207 274 B3 hervor. Der dort beschriebene Bremswiderstand ist an einem Schienenfahrzeug eingesetzt, in dessen Dachbereich untergebracht und wird im Betrieb des Fahrzeugs dauerhaft von Fahrtwind umströmt, um den Bremswiderstand zu kühlen. Hintergrund dessen ist es, dass im Bremsfall der Bremswiderstand mit Strom aus der elektrodynamischen/generatorischen Bremse des Fahrzeugs beaufschlagt wird. Dieser Strom führt zur Erwärmung des Bremswiderstands, so dass eine nachfolgende Entwärmung erforderlich ist.

Beim Betrieb eines solchen Bremswiderstands ist es erforderlich, seine Temperatur zu überwachen, so dass hitzebedingte Zerstörungen vermieden werden.

Ausgehend hiervon liegt der Erfindung die Aufgabe zugrunde, den Bremswiderstand der eingangs genannten Art derart weiterzuentwickeln, dass ein ausreichender Schutz vor Überhitzung erzielt wird. Die Dokumente DE102018218296A1, FR1131168A, DE69400184T2, offenbaren weitere Bremswiderstände und Leistungswiderstände mit Kühlung.

Diese Aufgabe wird gelöst durch einen Bremswiderstand mit den Merkmalen des Anspruchs 1.

Danach zeichnet sich der eingangs genannte Bremswiderstand dadurch aus, dass der Bremswiderstand wenigstens eine langgestreckte Heizpatrone aufweist, die an ihren Enden Kaltbereiche ohne Heizelement und zwischen den Kaltbereichen einen Heißbereich, der sich bei Stromdurchfluss eines sich über die Länge des Heißbereiches erstreckenden Heizelementes thermisch in Längsrichtung der Heizpatrone ausdehnt, aufweist und mittels einer Lageranordnung gehalten ist, die ein Festlager und wenigstens ein Loslager umfasst, wobei der Bremswiderstand eine Überwachungseinrichtung aufweist, die aufgrund der Feststellung einer maximal zulässigen Heizpatronentemperatur auf der Basis einer erfassten maximalen thermischen Längenausdehnung der Heizpatrone den Bremswiderstand abschaltet.

Ein derart ausgebildeter Bremswiderstand verfügt über eine geeignete Überwachung seiner Temperatur, insbesondere der Heizpatronentemperatur. Der Bremswiderstand wird beispielsweise über eine mit der Überwachungseinrichtung in einer Signalverbindung stehende Fahrzeugsteuerung im Bedarfsfalle abgeschaltet, nämlich dann, wenn eine maximal zulässige Heizpatronentemperatur erreicht ist.

Vorteilhafterweise kann das Festlager an einem Ende der Heizpatrone in deren Kaltbereich angeordnet sein und die Überwachungseinrichtung an dem, dem Festlager gegenüberliegenden Ende der Heizpatrone in deren Kaltbereich. Bei dieser Ausführungsform steht eine gesamte Länge des Heißbereichs der Heizpatrone für eine thermische Längenausdehnung zur Verfügung, was eine Genauigkeit des Messergebnisses beispielsweise durch einen Wegaufnehmer erhöht.

Alternativ kann das Festlager im Heißbereich der Heizpatrone angeordnet sein und die Überwachungseinrichtung an wenigstens einem Ende der Heizpatrone in deren Kaltbereich vorgesehen sein. Bei dieser Ausführungsform der Erfindung ist der relevante Längenbereich der Heizpatrone für eine thermische Längenausdehnung kürzer als bei der zuvor beschriebenen Ausführungsform. Der Längenbereich reicht nämlich von dem vorgesehenen Festlager im Heißbereich bis zur Grenzfläche zwischen dem Heißbereich und dem Kaltbereich, in dessen Nähe die Überwachungseinrichtung vorgesehen ist.

Bei Anordnung des Festlagers im Heißbereich der Heizpatrone ist es zudem möglich, eine weitere Überwachungseinrichtung vorzusehen, die am gegenüberliegenden Ende der Heizpatrone in deren Kaltbereich angeordnet ist. In dieser Weise kann die doppelte Anzahl an Überwachungseinrichtungen insbesondere in ihrer Ausführungsform als Wegaufnehmer vorgesehen werden, was die Genauigkeit einer Temperaturmessung für die Heizpatrone erhöht.

Bevorzugt umfasst der Bremswiderstand wenigstens zwei Loslager, die über die Länge der Heizpatrone verteilt sind. In dieser Weise wird eine zuverlässige Abstützung der Heizpatrone erzielt, wobei sie mit Hilfe des Festlagers an einem Punkt ihrer Längenausdehnung fixiert ist.

In einer Ausführungsform kann die Überwachungseinrichtung wenigstens einen beispielsweise potentiometrisch, auf Basis des Halleffekts, magnetostriktiv oder induktiv arbeitenden Wegaufnehmer zur Erfassung einer aktuellen thermischen Längenausdehnung der Heizpatrone aufweisen, wobei die aktuelle Längenausdehnung eine aktuelle Heizpatronentemperatur wiedergibt. Der Wegaufnehmer kann somit dazu verwendet werden, eine aktuelle mittlere Temperatur der Heizpatrone zu ermitteln, wobei ein Erreichen der maximalen zulässigen Heizpatronentemperatur eine Abschaltung des Bremswiderstands nach sich zieht. Für die Berechnung der aktuellen Heizpatronentemperatur ist es erforderlich, den thermischen Ausdehnungskoeffizienten der Heizpatrone einzubeziehen. Zudem ist durch die Temperaturüberwachung bei einem Schienenfahrzeug die Möglichkeit gegeben, einen vorhandenen energetischen Restpuffer, welcher für eine mögliche Bremsung zur Verfügung steht, zu berechnen. Der energetische Restpuffer entspricht der spezifischen Wärmekapizität des Heizpatronenmaterials, multipliziert mit der beheizten Masse, multipliziert mit der Differenz aus einer zulässigen Maximaltemperatur der Heizpatronen und der Ist-Temperatur der Heizpatronen.

In einer demgegenüber vereinfachten Ausführung der Erfindung kann auch die Funktion des Wegaufnehmers durch einen z. B. in Verlängerung der Heizpatrone angeordneten Endlagenschalter übernommen werden. Hiermit wird dann lediglich das Vor- oder Nichtvorliegen der maximal zulässigen Heizpatronentemperatur überwacht.

Bei einer Mehrzahl gleichartiger Heizpatronen kann dann die Temperaturüberwachung sowohl über einen jeweiligen Wegaufnehmer (z. B. kontinuierliche Temperaturmessung als auch über einen Endlagenschalter (nur Maximaltemperatur) erfolgen.

Bevorzugt wird der Bremswiderstand eine Mehrzahl von mit der vorstehend näher erläuterten Heizpatrone baugleichen und parallel zueinander angeordneten Heizpatronen aufweisen. Diese gesamte Mehrzahl von Heizpatronen können das Festlager als gemeinsames Festlager und die Loslager als gemeinsame Loslager nutzen. Ebenso treffen die oben für die einzelne Heizpatrone getroffenen Ausführungen hinsichtlich Ausbildung und Anordnung der Überwachungseinrichtung in ihren alternativen Ausführungsformen in gleicher Weise für die Mehrzahl von Heizpatronen zu.

Danach kann es vorgesehen sein, dass die Überwachungseinrichtung für jede Heizpatrone einen Mitnehmer, der an dem zugeordneten Ende der Heizpatrone angebracht ist, und einen Anschlag zum Zusammenwirken mit dem Mitnehmer aufweist, die Anschläge gegen einen den Heizpatronen gemeinsamen Schieber abgestützt sind und eine Ortsposition des Schiebers mittels eines Wegaufnehmers erfasst ist und/oder der Schieber einen Endlagenschalter betätigt, wenn die thermische Längenausdehnung wenigstens einer der Heizpatronen einen Wert erreicht, der der maximal zulässigen Heizpatronentemperatur entspricht.

Denkbar ist für alternative Ausführungsformen der Erfindung auch die Verwendung eines Seilzuges statt des Schiebers oder von Hebeln statt der Anschläge.

Vorstehende Maßnahmen gestatten es, die Temperaturbeaufschlagung des Bremswiderstands in geeigneter Weise zu überwachen. Sobald eine der Heizpatronen die maximal zulässige Heizpatronentemperatur erreicht, wird entweder unmittelbar mittels des Schiebers ein Endlagenschalter betätigt oder ein Ausgangssignal des Wegaufnehmers wird dahingehend ausgewertet, dass eine Abschaltung vorzunehmen ist. Sofern sämtliche Heizpatronen mit z. B. Wegaufnehmern als Überwachungseinrichtungen ausgestattet sind, lassen sich sämtliche Einzeltemperaturen der Heizpatronen überwachen.

Dabei kann der Schieber derart vorgespannt sein, dass er bei Abkühlen der Heizpatronen zurück in seine Nulllage verbracht wird.

Ausführungsbeispiele der Erfindung werden nachfolgend unter Bezugnahme auf die Zeichnungen noch näher erläutert, wobei funktionsgleiche Komponenten mit denselben Bezugszeichen bezeichnet sind. Es zeigen:
Figur 1: eine Querschnittsansicht einer Heizpatrone zur Verwendung bei einem Bremswiderstand für ein Schienenfahrzeug,
Figur 2: eine schematische Seitenansicht der Heizpatrone von Figur 1 in Kombination mit einer Lager-Anordnung für die Heizpatrone in einer ersten Ausführungsform und einer Überwachungseinrichtung (oben Kaltzustand, unten Heißzustand),
Figur 3 eine schematische Seitenansicht der Heizpatrone von Figur 1 in Kombination mit einer Lager-Anordnung für die Heizpatrone in einer zweiten Ausführungsform und einer Überwachungseinrichtung (oben Kaltzustand, unten Heißzustand) und
Figur 4: eine schematische Ansicht von oben auf einen Endabschnitt einer Mehrzahl parallel zueinander angeordneter Heizpatronen in Kombination mit einer Überwachungseinrichtung (oben Kaltzustand, unten Heißzustand).

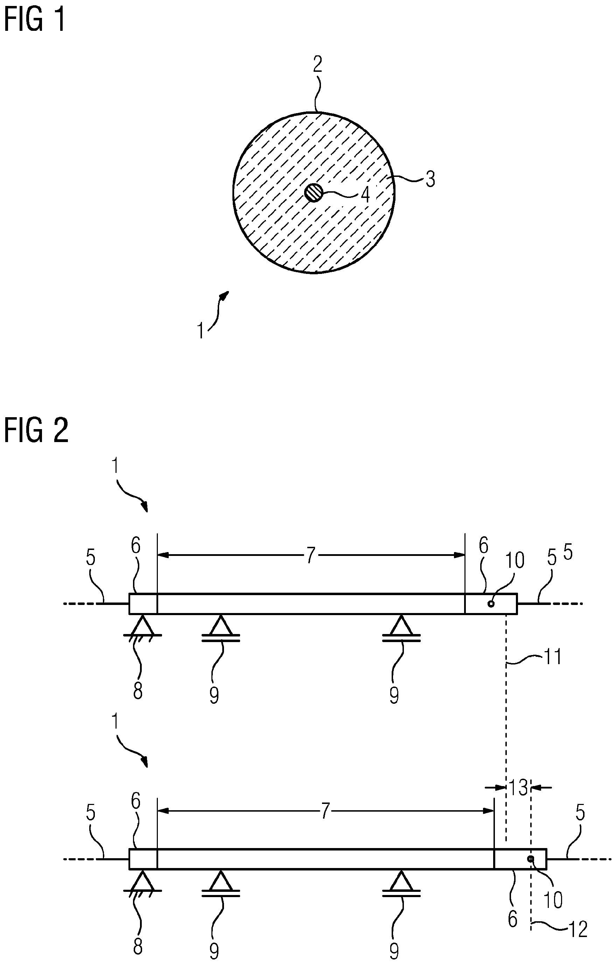

Figur 1 zeigt eine Querschnittsansicht einer Heizpatrone 1 zur Verwendung bei einem Bremswiderstand für ein Schienenfahrzeug, der für seine Entwärumg durch Fahrtwind auf dessen Dach untergebracht sein kann. Typischer Weise wird ein solcher Bremswiderstand eine Mehrzahl (z. B. ca. 20 bis 100) von mit der Heizpatrone 1 gleichartigen Heizpatronen aufweisen, die parallel zueinander (eine Anordnung sowohl nebeneinander als auch höhenversetzt zueinander ist denkbar) angeordnet und gelagert ist. Die Heizpatrone 1 hat eine zylinderförmige äußere Form und wird nach außen von einem Metallmantel 2 begrenzt. Im Inneren des Metallmantels 2 befindet sich eine Füllung 3 aus verdichtetem Keramikpulver, wobei die Füllung 3 ein zentral auf der Längsachse der Heizpatrone 1 befindliches Heizelement 4 umgibt. In dem Fall, wenn eine elektrodynamische Bremseinrichtung eines Fahrzeugs betätigt wird und elektrische Energie mit Hilfe des Bremswiderstands durch Wärmeabgabe abzuführen ist, wird das Heizelement 4 von Strom durchflossen, so dass es sich erheblich aufheizt.

Figur 2 zeigt in ihrem oberen Teil die Heizpatrone 1 in ihrem Kaltzustand. An ihren freien Enden ist die Heizpatrone 1 mit elektrischen Anschlüssen 5 ausgestattet. Die freien Enden der Heizpatrone 1 sind als Kaltbereiche 6 der Heizpatrone 1 ausgebildet, d.h. sie weisen keinen Längenabschnitt des eigentlichen Heizelementes 4 auf und zeigen selbst bei Stromdurchfluss für das Heizelement 4 nur eine verhältnismäßig geringe Temperaturerhöhung. Zwischen den beiden endständigen Kaltbereichen 6 liegt ein Heißbereich 7 der Heizpatrone 1, der über seine gesamte Länge mit dem Heizelement 4 ausgestattet ist. Ein Stromdurchfluss des Heizelementes 4 im Bremsfall bewirkt somit eine thermische Längenänderung der Heizpatrone 1. Beispielsweise vergrößert sich die Länge der Heizpatrone 1, wenn deren Heißbereich 7 6 m lang ist, bei der Erwärmung von 20 °C auf 600 °C um ca. 60 mm. Dies entspricht ca. 1 % bezogen auf die Länge des Heißbereichs 7. Der thermische Ausdehnungskoeffizient der Heizpatrone 1 entspricht im Wesentlichen dem von Edelstahl.

Im Ausführungsbeispiel der Figur 2 ist die Heizpatrone 1 in einem ihrer Kaltbereiche 6 mit Hilfe eines Festlagers 8 örtlich fixiert. Dazu weist eine Lageranordnung für die Heizpatrone 1 noch zwei Loslager 9 auf, die entlang des Heißbereichs 7 zur Abstützung der Heizpatrone 1 geeignet verteilt angeordnet sind.

Das festlagerfreie Ende, das ebenfalls als Kaltbereich 6 vorliegt, ist als Überwachungseinrichtung für eine Temperatur des Heißbereichs 7 der Heizpatrone 1 mit einem als Potentiometer ausgeführten Wegaufnehmer 10 ausgestattet. Mit Hilfe des Wegaufnehmers 10 wird eine thermische Längenausdehnung der Heizpatrone 1 gemessen und bei Erreichen einer maximal zulässigen Heizpatronentemperatur eine Abschaltung des Bremswiderstands herbeigeführt. Dazu wird das Messsignal des Wegaufnehmers 10 von einer Fahrzeugsteuerung (z. B. Zugsteuergerät und Antriebssteuergerät) ausgewertet und durch diese wird eine Bestromung des Bremswiderstandes gestoppt. Zusätzlich gestattet es der Wegaufnehmer 10 den Restwärmepuffer, welchen der Bremswiderstand noch vorhält, zu berechnen. Anhand von diesem kann berechnet werden, wie schnell z. B. ein mit dem Bremswiderstand ausgestattetes Schienenfahrzeug maximal fahren darf, damit noch genügend Rückhalt für eine Schnellbremsung gegeben ist. Wenn eine Schnellbremsung eingeleitet wird und der Bremswiderstand heißer als die festgelegte Grenztemperatur werden sollte, muss das Schienenfahrzeug dennoch bis zum Stopp gebremst werden können.

Der untere Teil von Figur 2 zeigt die Heizpatrone 1 in ihrem Heißzustand, d.h. in dem Fall, wenn der Heißbereich 7 aufgrund von Stromdurchfluss erhitzt ist und somit eine thermische Längenausdehnung des Heißbereichs 7 vorliegt. Da die Heizpatrone 1 thermisch sehr träge ist und sich langsam abkühlt (Minutenbereich) ist der Heißzustand nicht zwingend dadurch gekennzeichnet, dass das Heizelement 4 von Strom durchflossen ist. In Figur 2 ist eine Nulllage für die Heizpatrone 1 mit einer gestrichelten Linie 11 und eine neue Lage mit thermisch gedehntem Heißbereich 7 mit einer gestrichelten Linie 12 veranschaulicht. Für die Überwachungseinrichtung ergibt sich eine Translation 13 zwischen den beiden Linien 11 und 12, wobei die Translation 13 mit Hilfe eines thermischen (Längs-)Ausdehnungskoeffizienten des Heißbereichs 7 in eine mittlere Temperatur dieses Heißbereichs 7 umgerechnet und für die Zwecke einer Abschaltung des Bremswiderstands bei Erreichen der maximal zulässigen Heizpatronentemperatur zu dessen Abschaltung herangezogen werden kann.

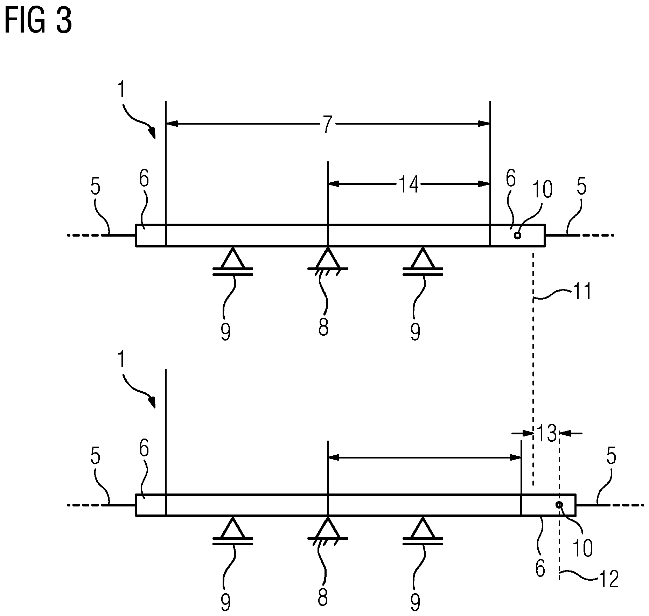

Im Vergleich zur Figur 2 ist in Figur 3 allein die Lagerung der Heizpatrone 1 geändert. Bei der Ausführungsform nach Figur 3 befindet sich das Festlager 8 in einem zentralen Längenbereich der Heizpatrone 1. Die beiden Loslager 9 sind jeweils zu beiden Seiten des Festlagers 8 angeordnet. Durch die Änderung der Lagerung ergibt sich insbesondere ein abweichender relevanter Abschnitt des Heißbereichs 7 für eine vorzunehmende Abschaltung des Bremswiderstands. Während bei der Ausführungsform nach Figur 2 der gesamte Heißbereich 7 in seiner Längenausdehnung erfasst wird, umfasst bei der Ausführungsform nach Fig. 3 ein relevanter Heißbereich 14 lediglich die Strecke von dem Festlager 8 bis zu der Grenzfläche zwischen dem Heißbereich 7 und dem mit dem Wegaufnehmer 10ausgestatteten Kaltbereich 6 der Heizpatrone 1. In einer nicht dargestellten Ausführungsform der Erfindung kann auch der lagerfreie Kaltbereich 6 mit einem weiteren Wegaufnehmer, der mit dem Wegaufnehmer 10 gleichartig ist, ausgeführt sein.

Was in den Fig. 1 bis 3 dargestellt ist, gilt gleichermaßen für eine Mehrzahl von mit der Heizpatrone 1 gleichartigen Heizpatronen, die zu demselben Bremswiderstand gehören. Dann findet für jede der Heizpatronen eine geeignete Temperaturüberwachung mittels Wegaufnehmern statt, die vorzugsweise mit dem Wegaufnehmer 10 baugleich sind. Sämtliche Wegaufnehmer signalisieren dann der Fahrzeugsteuerung aktuelle Temperaturen der Heizpatronen.

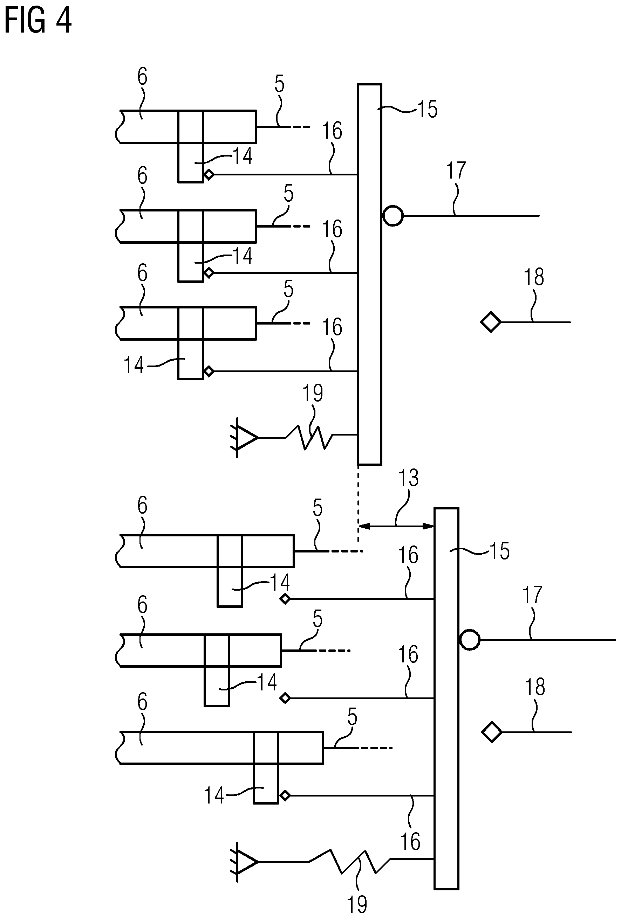

Alternativ kann für eine Mehrzahl von Heizpatronen wie folgt vorgegangen werden: Stellvertretend für einen Bremswiderstand, der mit einer Vielzahl von mit der Heißpatrone 1 gleichartigen Heizpatronen ausgestattet ist, zeigt Figur 4 einen Endbereich von drei versetzt angeordneten Heizpatronen 1. Die jeweiligen (hier nur teilweise dargestellten) Kaltbereiche 6 der Heizpatronen 1 sind sämtlich mit einem Mitnehmer 14 ausgestattet. In einem Abstand in Längsrichtung der Heizpatronen 1 ist ein Schieber 15 vorgesehen, der orthogonal zu den Heizpatronen 1 verläuft und damit entlang deren Enden angeordnet ist. Für jede Heizpatrone 1 weist der Schieber 15 einen Anschlag 16 auf, der in Längsrichtung der Heizpatronen 1 verläuft und an seiner einen Seite am Schieber 15 angebracht ist, während seine gegenüberliegende Seite gegen den Mitnehmer 14 stößt. Im oberen Teil von Figur 2 ist wiederum die Lage der Heizpatronen 1 in deren Kaltzustand gezeigt. Dies bedeutet, dass sich der Schieber 15, die Anschläge 16 und die Mitnehmer 14 jeweils in einer Nulllage befinden. Zur Überwachung der Position des Schiebers 15 ist dieser mit einem als Potentiometer ausgeführten Wegaufnehmer 17 ausgestattet.

Der untere Teil von Figur 4 zeigt die Heizpatronen 1 in ihrem Heißzustand, bei dem die einzelnen Heizpatronen 1 jeweils eine thermische Längenausdehnung erfahren, die bei den drei dargestellten Heizpatronen 1 jeweils unterschiedlich stark ausfällt. Während die in Figur 4 ganz unten dargestellte Heizpatrone 1 die größte thermische Längenausdehnung erfährt, liegen die thermischen Längenausdehnungen der weiteren Heizpatronen 1 niedriger. Durch die Anschläge 16 und den Schieber 15 wird für die Erfassung der maximalen Heizpatronentemperatur lediglich ein Wegaufnehmer 17 benötigt.

Während in Figur 4 die Überwachungseinrichtung die Mitnehmer 14, die Anschläge 16, den Schieber 15 und den Wegaufnehmer 17 umfasst, kann alternativ oder, wie in Fig. 4 dargestellt, zusätzlich auch vorgesehen sein, dass der Schieber 15 unmittelbar einen passend zum Erreichen einer maximal zulässigen Heizpatronentemperatur angeordneten Endlagenschalter 18 unmittelbar betätigt. Bei Bedarf können auch mehrere Endlagenschalter 18 vorgesehen sein.

Mit Hilfe geeigneter Rückholeinrichtungen 19, die beispielsweise von Zugfedern, aber auch weiteren Aktuatoren, wie geeignet geführte Schraubendruckfedern, Gasdruckfedern oder ähnliches, gebildet sein können, ist der Schieber 15 in Richtung auf die benachbarten Enden der Heizpatronen 1 vorgespannt, so dass er bei Abkühlen der Heizpatronen 1 wieder seine Nulllage erreicht.

Der Endlagenschalter 18 gibt bevorzugt ein binäres Signal aus, welches von der Fahrzeugsteuerung ausgewertet wird, dieses führt gegebenenfalls dazu, dass die Bestromung des Bremswiderstandes gestoppt wird.

Die Stromzufuhr wird von der Fahrzeugsteuerung beendet, da der Strom, welcher durch den Bremswiderstand fließt, nicht direkt von dem Endlagenschalter 18 unterbrochen werden soll, da hier mehrere hundert Kilowatt an Leistung vorliegen. Die Messung der Maximaltemperatur über den Wegaufnehmer wird genutzt, um die zulässige Zuggeschwindigkeit zu begrenzen, um genug thermischen Puffer für eine Schnellbremsung in diesem Moment vorzuhalten ohne, dass der Bremswiderstand überhitzt.

In dem Fall, wenn die Schnellbremsung eintritt und der Bremswiderstand trotz des thermischen Rückhaltes die maximal zulässige Grenztemperatur, welche gesondert über den Endlagenschalter (18) detektiert wird, überschreitet, wird der Bremswiderstand, gesteuert von der Fahrzeugsteuerung für zukünftige Bremsungen nicht mehr genutzt. Dies geschieht, da das Überhitzen trotz des thermischen Puffers darauf hindeutet, dass z.B. mittlerweile zu viele Heizpatronen ausgefallen sind (nicht heizen) und der thermische Puffer demnach kleiner ist als der theoretische, oder sehr viele Worst-Case Szenarien zusammentreffen, wie Bremsen an einem heißen trockenen Sommertag mit Rückenwind und Gefälle.

## Patentansprüche

1. Bremswiderstand für ein mit einer elektrodynamischen Bremseinrichtung ausgestattetes Fahrzeug,
**dadurch gekennzeichnet, dass**
der Bremswiderstand wenigstens eine langgestreckte Heizpatrone (1) aufweist, die
- an ihren Enden Kaltbereiche (6) ohne Heizelement (4) und zwischen den Kaltbereichen (6) einen Heißbereich (7), der sich bei Stromdurchfluss eines sich über die Länge des Heißbereiches (7) erstreckenden Heizelementes (4) thermisch in Längsrichtung der Heizpatrone (1) ausdehnt, aufweist und
- mittels einer Lageranordnung gehalten ist, die ein Festlager (8) und wenigstens ein Loslager (9) umfasst,
- wobei der Bremswiderstand eine Überwachungseinrichtung aufweist, die aufgrund der Feststellung einer maximal zulässigen Heizpatronentemperatur auf der Basis einer erfassten maximalen thermischen Längenausdehnung der Heizpatrone (1) den Bremswiderstand abschaltet.

2. Bremswiderstand nach Anspruch 1,
**dadurch gekennzeichnet, dass**
das Festlager (8) an einem Ende der Heizpatrone (1) in deren Kaltbereich (6) angeordnet ist und die Überwachungseinrichtung an dem dem Festlager (8) gegenüberliegenden Ende der Heizpatrone (1) in deren Kaltbereich (6) angeordnet ist.

3. Bremswiderstand nach einem der Ansprüche 1 oder 2,
**dadurch gekennzeichnet, dass**
das Festlager (8) im Heißbereich (7) der Heizpatrone (1) angeordnet ist und die Überwachungseinrichtung an wenigstens einem Ende der Heizpatrone (1) in deren Kaltbereich (6) vorgesehen ist.

4. Bremswiderstand nach Anspruch 3,
**dadurch gekennzeichnet, dass**
eine weitere Überwachungseinrichtung vorgesehen ist, die am gegenüberliegenden Ende der Heizpatrone (1) in deren Kaltbereich (6) angeordnet ist.

5. Bremswiderstand nach einem der Ansprüche 1 bis 4,
**dadurch gekennzeichnet, dass**
er wenigstens zwei über die Länge der Heizpatrone (1) verteilte Loslager (9) umfasst.

6. Bremswiderstand nach einem der Ansprüche 1 bis 5,
**dadurch gekennzeichnet, dass**
die Überwachungseinrichtung wenigstens einen Wegaufnehmer (10) zur Erfassung einer aktuellen thermischen Längenausdehnung der Heizpatrone (1) aufweist, wobei die aktuelle Längenausdehnung eine aktuelle Heizpatronentemperatur wiedergibt.

7. Bremswiderstand nach Anspruch 1,
**dadurch gekennzeichnet, dass**
er eine Mehrzahl von mit der Heizpatrone (1) baugleichen und parallel zueinander angeordneten Heizpatronen (1) aufweist, wobei
- die Überwachungseinrichtung für jede Heizpatrone (1) einen Mitnehmer (14), der an dem zugeordneten Ende der Heizpatrone (1) angebracht ist, und einen Anschlag (16) zum Zusammenwirken mit dem Mitnehmer (14) aufweist,
- die Anschläge gegen einen den Heizpatronen (1) gemeinsamen Schieber (15) abgestützt sind und
- eine Ortsposition des Schiebers (15) mittels eines Wegaufnehmers (17) erfasst ist und/oder der Schieber (15) einen Endlagenschalter (18) betätigt, wenn die thermische Längenausdehnung wenigstens einer der Heizpatronen (1) einen Wert erreicht, der der maximal zulässigen Heizpatronentemperatur entspricht.

8. Bremswiderstand nach Anspruch 7,
**dadurch gekennzeichnet, dass**
der Schieber (15) derart vorgespannt ist, dass der Mitnehmer (14) bei Abkühlen der Heizpatrone (1) zurück in seine Nulllage verbracht wird.

## Claims

1. Braking resistance for a vehicle equipped with an electrodynamic braking device,
**characterized in that**
the braking resistance has at least one elongated heating cartridge (1), which
- at its ends has cold regions (6) without a heating element (4) and, between the cold regions (6), has a hot region (7) which, when a current flows through a heating element (4) extending over the length of the hot region (7), expands thermally in the longitudinal direction of the heating cartridge (1), and
- is held by means of a bearing arrangement, which comprises a fixed bearing (8) and at least one floating bearing (9),
- wherein the braking resistance has a monitoring device, which switches off the braking resistance owing to determining a maximum permissible heating cartridge temperature on the basis of a detected maximum thermal longitudinal expansion of the heating cartridge (1).

2. Braking resistance according to Claim 1,
**characterized in that**
the fixed bearing (8) is arranged at one end of the heating cartridge (1), in its cold region (6), and the monitoring device is arranged on the end of the heating cartridge (1) that is opposite to the fixed bearing (8), in its cold region (6).

3. Braking resistance according to either of Claims 1 and 2, **characterized in that**
the fixed bearing (8) is arranged in the hot region (7) of the heating cartridge (1), and the monitoring device is provided at at least one end of the heating cartridge (1), in its cold region (6) .

4. Braking resistance according to Claim 3,
**characterized in that**
a further monitoring device is provided, which is arranged at the opposite end of the heating cartridge (1), in its cold region (6) .

5. Braking resistance according to one of Claims 1 to 4, **characterized in that**
it comprises at least two floating bearings (9) distributed over the length of the heating cartridge (1).

6. Braking resistance according to one of Claims 1 to 5, **characterized in that**
the monitoring device has at least one displacement transducer (10) for detecting a current thermal longitudinal expansion of the heating cartridge (1), the current longitudinal expansion reproducing a current heating cartridge temperature.

7. Braking resistance according to Claim 1,
**characterized in that**
it has a plurality of heating cartridges (1) that are identical to the heating cartridge (1) and arranged parallel to one another, wherein
- the monitoring device for each heating cartridge (1) has a driver (14), which is attached to the associated end of the heating cartridge (1), and a stop (16) to interact with the driver (14),
- the stops are supported against a slider (15) that is common to the heating cartridges (1), and
- a spatial position of the slider (15) is detected by means of a displacement transducer (17) and/or the slider (15) actuates an end position switch (18) if the thermal longitudinal expansion of at least one of the heating cartridges (1) reaches a value which corresponds to the maximum permissible heating cartridge temperature.

8. Braking resistance according to Claim 7,
**characterized in that**
the slider (15) is preloaded in such a way that, when the heating cartridge (1) cools down, the driver (14) is moved back into its zero position.

## Revendications

1. Résistance de freinage pour un véhicule équipé d'un dispositif électrodynamique de frein,
**caractérisée en ce que**
la résistance de freinage a au moins une cartouche (1) de chauffage, qui s'étend en longueur, et qui
- a, à ses extrémités, des parties (6) froides sans élément (4) de chauffage et, entre les parties (6) froides, une partie (7) chaude qui, lors du passage du courant dans un élément (4) de chauffage s'étendant sur la longueur de la partie (7) chaude, se dilate thermiquement dans la direction longitudinale de la cartouche (1) de chauffage, et
- est maintenue au moyen d'un dispositif à palier, qui comprend un palier (8) fixe et au moins un palier (9) libre,
- dans lequel la résistance de freinage a un dispositif de contrôle qui, sur la base de la constatation d'une température admissible au maximum de la cartouche de chauffage, sur la base de la dilatation thermique longitudinale maximum détectée de la cartouche (1) de chauffage, met la résistance de freinage hors circuit.

2. Résistance de freinage suivant la revendication 1,
**caractérisée en ce que**
le palier (8) fixe est disposé à une extrémité de la cartouche (1) de chauffage dans sa partie (6) froide et le dispositif de contrôle est disposé à l'extrémité, opposée au palier (8) fixe, de la cartouche (1) de chauffage dans sa partie (6) froide.

3. Résistance de freinage suivant l'une des revendications 1 ou 2,
**caractérisée en ce que**
le palier (8) fixe est disposé dans la partie (7) chaude de la cartouche (1) de chauffage et le dispositif de contrôle est prévu à au moins une extrémité de la cartouche (1) de chauffage dans sa partie (6) froide.

4. Résistance de freinage suivant la revendication 3, **caractérisée en ce qu'**
il est prévu un autre dispositif de contrôle, qui est disposé à l'extrémité opposée de la cartouche (1) de chauffage dans sa partie (6) froide.

5. Résistance de freinage suivant l'une des revendications 1 à 4,
**caractérisée en ce qu'**
elle comprend au moins deux paliers (9) libres répartis sur la longueur de la cartouche (1) de chauffage.

6. Résistance de freinage suivant l'une des revendications 1 à 5,
**caractérisée en ce que**
le dispositif de contrôle a au moins un capteur (10) de course pour la détection d'une dilatation thermique en longueur en cours de la cartouche (1) de chauffage, la dilatation en longueur en cours reproduisant une température en cours de la cartouche de chauffage.

7. Résistance de freinage suivant la revendication 1,
**caractérisée en ce qu'**
elle a une pluralité de cartouches (1) de chauffage de même construction que la cartouche (1) et disposées parallèlement entre elles, dans laquelle
- le dispositif de contrôle de chaque cartouche (1) de chauffage a un entraîneur (14), qui est monté à l'extrémité associée de la cartouche (1) de chauffage, et une butée (16) de coopération avec l'entraîneur (14),
- les butées sont appuyées sur un coulisseau (15) commun aux cartouches (1) de chauffage, et
- une position dans l'espace du coulisseau (15) est détectée au moyen d'un détecteur (17) de course et/ou le coulisseau (15) actionne un interrupteur (18) de fin de course, si la dilatation thermique en longueur d'au moins l'une des cartouches (1) de chauffage atteint une valeur, qui correspond à la température admissible au maximum d'une cartouche de chauffage.

8. Résistance de freinage suivant la revendication 7, **caractérisée en ce que**
le coulisseau (15) est précontraint de manière à ce que l'entraîneur (14) revienne dans sa position de zéro, lorsque la cartouche (1) de chauffage est refroidie.
